# FASCICULE DE BREVET EUROPEEN

(11) **EP 4 055 266 B1**
(45) Date de publication et mention de la délivrance du brevet: **18.06.2025**
(21) Numéro de dépôt: 20800151.1
(22) Date de dépôt: 04.11.2020
(51) Int. Cl.: F02M 35/10, F02F 1/24, F01M 13/04, F01M 13/02, F02M 25/06, F02F 1/42

(54) **DISPOSITIF D'ADMISSION DE GAZ DÉSHUILÉS À L'ENTRÉE D'UNE CULASSE AVEC DES DÉFLECTEURS**
BLOW-BY GAS-EINLASSVORRICHTUNG AM EINLASS EINES ZYLINDERKOPFES MIT ABLENKERN
BLOW-BY GAS INLET DEVICE AT THE ENTRY OF A CYLINDER HEAD WITH DEFLECTORS

(30) Priorité: 08.11.2019 FR 1912589
(43) Date de publication de la demande: 14.09.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: DA SILVA, Paulo, 78500 SARTROUVILLE (FR); VENEZIANI, Thomas, 75015 PARIS (FR)
(74) Mandataire: Renault Group
(86) Numéro de dépôt international: PCT/EP2020/080975
(87) Numéro de publication internationale: WO 2021/089630

(56) Documents cités:
- WO-A1-2011/120932
- WO-A1-2012/028639
- FR-A1- 2 961 559
- JP-A- 2001 140 713

## Description

### Domaine technique de l'invention

La présente invention concerne un moteur thermique ou à combustion interne de véhicule automobile.

La présente invention concerne également une ligne d'admission du moteur thermique.

La présente invention concerne plus particulièrement une ligne de circulation des gaz d'admission comprenant des gaz issus de vapeurs d'huile ou déshuilés.

### Etat de la technique

Un moteur thermique ou à combustion interne de véhicule automobile présente une face d'admission à laquelle sont fixés des dispositifs d'amenée d'air frais pour être injectés dans le moteur et une face d'échappement disposée sur un côté opposé à laquelle sont fixés d'autres dispositifs d'échappement d'une ligne d'échappement pour acheminer des gaz brulés vers des systèmes de dépollution et vers l'extérieur du moteur. Les deux faces sont longitudinales et symétriquement opposées l'une à l'autre par rapport à un plan médian vertical du moteur s'étendant longitudinalement.

De manière connue, pour réduire les rejets de polluants, les moteurs thermiques sont dotés de ligne de recirculation de gaz brulés et de gaz issus de vapeurs d'huile ou déshuilés. Lesdits gaz sont renvoyés vers l'admission du moteur pour être mélangés à l'air frais avant d'être injectés dans le circuit d'admission d'air du moteur. Les gaz déshuilés sont aussi dénommés gaz de blow-by en anglais.

Les gaz recirculés sont de deux types :
- les gaz recirculés dits haute pression sont prélevés directement à la sortie de la face échappement du moteur par exemple depuis une chambre creusée dans la culasse ou depuis un collecteur d'échappement fixé à ladite culasse.
- les gaz recirculés dits basse pression sont prélevés plus en aval selon le sens d'écoulement des gaz et notamment au niveau ou en aval d'un dispositif de dépollution des gaz brulés tels qu'un catalyseur ou un piège à Nox ou oxydes d'azote.

Les gaz déshuilés désignent des gaz issus de vapeurs d'huile qui passent par un décanteur d'huile fixé au moteur, de façon générale à un point haut du moteur, à la culasse

Les gaz brulés recirculés sont généralement mélangés à l'air frais qui peut être compressé suite à un passage au travers d'un étage de compression, de façon connue en amont d'un répartiteur d'admission.

Les gaz déshuilés peuvent injectés dans le flux d'air frais généralement dans un plénum du répartiteur d'admission ou directement dans les conduits d'admission de la culasse par des canaux creusés dans ladite culasse.

Les publications EP1447533A1 ou JP2001140713A proposent ainsi une injection de gaz issus de vapeurs d'huile par des canaux creusés dans la culasse depuis un décanteur de gaz disposé en partie haute du moteur sur la culasse.

L'invention concerne une injection des gaz issus de vapeurs d'huile à l'admission d'un moteur thermique. L'invention concerne une implémentation particulière du conduit d'arrivée des gaz déshuilés en aval du décanteur selon le sens d'écoulement desdits gaz, ledit conduit est creusé dans la culasse pour déboucher de la face d'admission de la culasse à proximité du répartiteur d'admission.

Le perçage dans la culasse de canal apte à diriger les gaz issus de vapeurs d'huile dans les conduits d'admission de la culasse implique de disposer de la matière autour dudit canal ce qui entraine un encombrement plus important de la culasse et une augmentation de la masse de ladite culasse.

Il est connu aussi un rail d'admission de gaz déshuilés connecté au répartiteur et qui s'étend selon un axe parallèle à l'axe du vilebrequin ou du moteur, ledit rail est prolongé par des canaux d'injection sensiblement transversaux au rail pour déboucher dans le plénum du répartiteur d'admission.

Un inconvénient est la formation des canaux d'injection qui nécessite de la matière notamment au niveau d'une bride de fixation ou du répartiteur et qui complexifie l'obtention du rail d'admission de gaz déshuilés.

Le but de l'invention est de remédier à ces problèmes et un des objets de l'invention est un dispositif d'admission de moteur thermique de véhicule automobile comportant une culasse et un répartiteur d'admission fixé contre une paroi de fixation de la culasse, ledit répartiteur et ladite culasse étant conformés pour délimiter un plénum d'admission recouvert par le répartiteur.

### Présentation de l'invention

La présente invention concerne plus particulièrement un dispositif d'admission de moteur thermique de véhicule automobile comportant une culasse et un répartiteur d'admission fixé par un système de fixation comportant un trottoir de fixation du répartiteur, contre une paroi de fixation de la culasse, ledit répartiteur et ladite culasse étant conformés pour délimiter un plénum d'admission recouvert par le répartiteur, caractérisé en ce que le système de fixation comprend un canal de distribution de gaz issus de vapeurs d'huile, comprenant une échancrure creusée en bordure du répartiteur entre le répartiteur et la culasse en partie inférieure du plénum et donnant dans le plénum, s'étendant sur la largeur du plénum, transversalement à l'axe d'écoulement de l'air.

De manière avantageuse, le canal de distribution des gaz déshuilés comprend une échancrure qui s'étend sur la largeur du plénum pour une bonne distribution desdits gaz et faciliter l'obtention dudit canal. Ladite échancrure est creusée en bordure du répartiteur en contact avec la culasse pour être à proximité des conduits d'admission de la culasse. L'échancrure donne dans le plénum pour faciliter l'admission des gaz déshuilés dans le plénum.

Selon d'autres caractéristiques de l'invention :
- l'échancrure présente une section transversale décroissante depuis la partie amont vers la partie aval selon le sens de circulation des gaz déshuilés.

De manière avantageuse, l'échancrure présente une section transversale décroissante depuis la partie amont vers la partie aval selon le sens d'écoulement des gaz afin de contrôler les distributions de gaz déshuilés dans les conduits d'admission de la culasse et accélérer l'écoulement des gaz.
- l'échancrure comprend une rampe disposée au bas de l'échancrure.

De manière avantageuse, l'échancrure comprend une rampe au bas de l'échancrure qui permet d'accélérer la vitesse des gaz déshuilé et de les diriger vers le plénum.
- la rampe présente une pente croissante d'amont en aval pour rapprocher le bas de l'extrémité aval de l'échancrure du plenum.

De manière avantageuse, la pente de la rampe est sensiblement continue pour permettre de diriger l'écoulement des gaz déshuilés et un ruissellement des condensats
- le canal de distribution comprend des déflecteurs disposés en bordure de l'échancrure pour diriger les gaz le long de l'échancrure.

De manière avantageuse, le canal de distribution comprend un ensemble de déflecteurs pour diriger les gaz déshuilés le long de l'échancrure et ainsi de contrôler les diffusions dans le plénum.
- le canal de distribution comporte un déflecteur amont apte à diriger les gaz le long de l'échancrure.

De manière avantageuse, le canal de distribution comprend un déflecteur amont apte à diriger les gaz le long de l'échancrure dans l'axe de ladite échancrure. L'objet de ce premier déflecteur est de diriger le flux de gaz depuis le débouché des gaz dans le canal de distribution vers l'échancrure et notamment selon l'axe de l'échancrure.
- l'échancrure comprend au moins un déflecteur de maintien agencé en bordure du plénum.

De manière avantageuse, l'échancrure comprend au moins un déflecteur de maintien agencé en bordure du plénum et apte d'une part à diriger une partie des gaz vers des conduits d'admission dédiés de la culasse et d'autre à maintenir une partie desdits gaz dans l'échancrure. Les déflecteurs sont agencés de manière préférentielle au niveau de la surface inférieure du plénum.
- le au-moins un déflecteur de maintien présente une forme de plaque inclinée qui converge vers le bas de l'échancrure selon le sens d'écoulement des gaz.

De manière avantageuse, la plaque formant le au-moins un déflecteur de maintien est inclinée et converge vers le bas de l'échancrure selon le sens d'écoulement des gaz et notamment vers la rampe pour d'une part diminuer les pertes de charge au passage des gaz dudit au-moins un déflecteur de maintien et d'autre part créer un convergent pour accroitre sensiblement la vitesse d'écoulement desdits gaz.
- l'échancrure comprend un déflecteur aval à l'extrémité aval de l'échancrure agencé en bas de l'échancrure.

De manière avantageuse, l'échancrure comprend un déflecteur aval agencé à l'extrémité aval de l'échancrure selon le sens d'écoulement des gaz et en bas de l'échancrure afin de diriger le restant de gaz vers le plénum.
- le dispositif comprend un débouché d'un conduit d'amenée de gaz débouchant de la paroi de fixation de la culasse.

De manière avantageuse, le dispositif d'admission peut comprendre un débouché de gaz déshuilés débouchant de la paroi de fixation de la culasse pour optimiser l'encombrement du moteur et de faciliter le dispositif d'admission.
- le répartiteur comprend un conduit d'amenée de gaz dont l'axe est parallèle au trottoir de fixation.

De manière avantageuse, le répartiteur peut comprendre un conduit d'amenée de gaz dont l'axe est parallèle au trottoir de fixation et qui débouche sensiblement directement dans l'échancrure, ce qui diminue les pertes de charges.
- le trottoir de fixation comprend un enfoncement de réception des gaz.

De manière avantageuse, le trottoir de fixation comprend un enfoncement de réception des gaz. Ledit enfoncement est connecté avec le canal de distribution.

Il est destiné en vis-à-vis du débouché du conduit d'amenée des gaz, de la paroi de fixation de la culasse pour amener de façon optimale les gaz vers le canal de distribution.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique d'une face d'admission de culasse de moteur thermique selon l'état de l'art.
[Fig. 2] est une vue schématique d'une paroi de fixation de la culasse pour un répartiteur d'admission selon l'invention.
[Fig.3] est une vue schématique d'un répartiteur d'admission selon l'invention.
[Fig4] est une vue de face de la paroi de fixation du répartiteur avec un canal de distribution de gaz déshuilés selon l'invention.
[Fig5] est une vue de face de la paroi de fixation du répartiteur avec un canal de distribution de gaz déshuilés selon l'invention.
[Fig.6] est une vue schématique de coupe transversale du dispositif d'admission selon l'invention.
[Fig.7] est une vue schématique des flux de gaz déshuilés circulant dans le canal de distribution selon l'invention.
[Fig.8] est une de face de la paroi de fixation du répartiteur avec un canal de distribution de gaz déshuilés selon un autre mode de réalisation de l'invention.

Dans la description qui va suivre, des chiffres de référence identiques désignent des pièces identiques ou ayant des fonctions similaires.

De manière connue, les moteurs thermiques ou à combustion comprend une culasse 30 fixée sur un carter-cylindre comprenant des cylindres dans lesquels sont montés des pistons mobiles selon en coulissement selon l'axe du cylindre.

Les termes haut/bas se réfèrent à un axe vertical qui peut être l'axe perpendiculaire au plan horizontal du moteur. Ledit plan horizontal peut être défini parallèle au plan de jointure entre le carter-cylindre et la culasse.

L'axe longitudinal du moteur est défini comme l'axe joignant les centres des cylindres sur le plan horizontal du moteur.

Les termes amont/aval se réfèrent au sens d'écoulement des gaz ou de l'air d'admission.

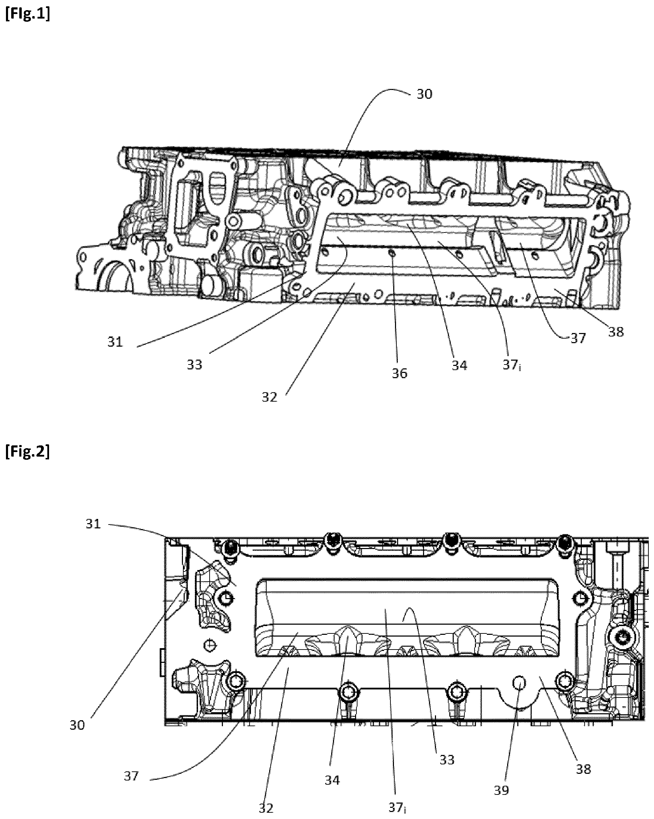

Le moteur thermique peut comprendre un circuit de réinjection de gaz issus de vapeurs d'huile à la face admission de la culasse. Tel que représenté dans la figure 1, la culasse 30 comprend une face d'admission 31. Dans ladite face d'amission, la culasse comporte une paroi de fixation 32 qui peut border un enfoncement 33 formant une partie aval 37i d'un plénum d'admission 37. Des conduits d'admission 34 sont creusés dans la culasse pour relier des cylindres du moteur au plénum 37. Lesdits conduits d'admission 34 débouchent dans le plénum notamment en partie basse de l'enfoncement 33 creusé dans la culasse comme représenté sur les figures 1 et 2. Les axes des débouchés des conduits d'admission sont sensiblement sur une ligne droite qui est parallèle à l'axe longitudinal du moteur. L'axe longitudinal du moteur peut être défini par l'axe

Il est connu dans l'état de d'art d'avoir un décanteur (non représenté) pour séparer depuis des vapeurs de gaz issus du fonctionnement du moteur, des gaz encore chauds et de l'huile ; ledit décanteur peut être disposé en haut du moteur, contre la culasse par exemple. L'huile obtenue peut alors retomber par gravité vers un carter d'huile par différents chemins. Les gaz issus de vapeurs d'huile sont appelés gaz de blow-by en anglais ou gaz déshuilés. Ils sont réintroduits à l'admission du moteur. Des conduits de gaz déshuilés peuvent être percés au travers de la culasse depuis le décanteur jusqu'au plénum d'admission. Lesdits conduits de gaz deshuilés débouchent en partie supérieure du plénum par des débouchés 36. Le perçage des conduits de gaz déshuilés nécessite d'avoir de la matière afin de garder une rigidité minimale de la culasse. Le perçage de conduits de gaz déshuilés peut entrainer une contrainte de masse minimale de culasse, ce qui va à l'encontre des objectifs de réduction de masse du véhicule et notamment du moteur pour améliorer la consommation du moteur et de réduire les rejets de polluants à l'extérieur du véhicule.

La figure 2 représente une culasse 30 avec la face 31 selon un mode de réalisation de l'invention. La culasse 30 comporte l'enfoncement 33 formant la partie aval 37i composant le plénum 37 d'admission d'air et de gaz dans le moteur. La culasse comporte une paroi de fixation 38 sur laquelle est fixé en appui le répartiteur d'admission 10 par un trottoir de fixation 11.

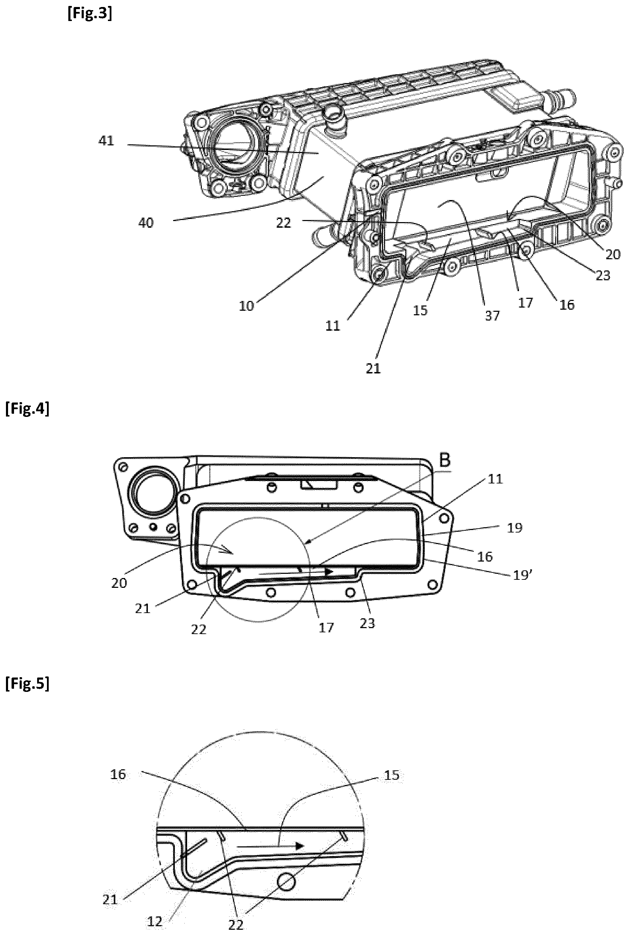

Selon la figure 3, le répartiteur d'admission 10 est selon l'invention formé par une bride de fixation d'un carter 41 entourant un échangeur de chaleur 40 de type eau-air. Ledit carter comprend une bouche d'entrée d'air qui a été compressé au passage d'un compresseur et qui peut être mélangé avec des gaz recirculés issus d'un circuit d'échappement du moteur. Le mélange air compressé et gaz recirculés peut être porté à une forte température et nécessite d'être refroidi. Le mélange passe donc au travers de l'échangeur de chaleur 40, avant son entrée dans le moteur. Par la suite, on désignera par les termes répartiteur ou bride la même pièce qui porte les deux fonctions.

Le dispositif d'admission 20 comporte donc la culasse avec l'enfoncement 33 et le répartiteur d'admission 10 fixés l'un à l'autre par un système de fixation comprenant le trottoir de fixation 11 du répartiteur 10.

Le trottoir de fixation 11 est fixé en appui contre la paroi de fixation 32 de la culasse 30. Ledit trottoir recouvre de manière avantageuse la surface de ladite paroi de fixation 32.

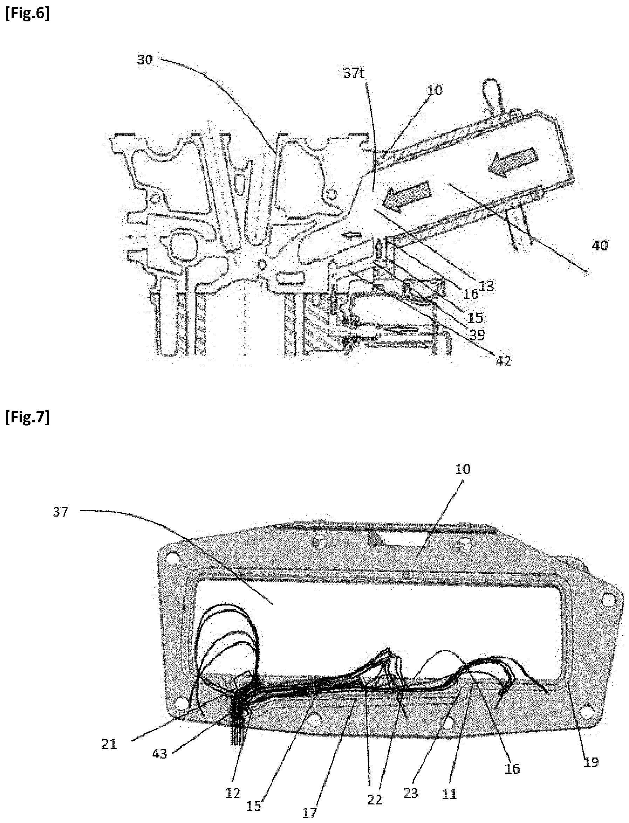

Dans cet exemple de réalisation selon la figure 6, le décanteur n'est pas fixé en partie haute du moteur mais contre une paroi d'un carter-cylindres, le carter-cylindres est de manière connue disposé en dessous de la culasse.

Le conduit d'amenée des gaz 42 peut par exemple s'étendre verticalement depuis le carter-cylindres vers la culasse. Ledit conduit d'amenée est de manière préférentielle creusé dans la paroi du carter-cylindres et de la culasse pour obtenir un moteur compact.

Toutefois, l'invention n'est cependant pas limitée à des moteurs comportant un décanteur disposé en position basse fixé au carter-cylindres.

Selon un mode de réalisation, la culasse comporte un débouché 39 du conduit d'amenée de gaz issus de vapeurs d'huile, agencé à côté de l'enfoncement 33 formant le plénum. L'axe du débouché est sensiblement orthogonal à la paroi de fixation 38 de la culasse. Ledit débouché 39 est selon les figures 1 et 2, disposé dans la paroi de fixation 38 qui est recouverte par la bride 10. Le débouché 39 est notamment entouré par le trottoir 11 de fixation du répartiteur.

Le répartiteur 10 peut comprendre un cône d'admission 13 dont la section de passage des gaz en extrémité aval selon le sens de circulation des gaz est sensiblement égale à la section de passage de l'enfoncement 33 de la culasse 30. Le volume intérieur 37t du cône de diffusion et le volume de l'enfoncement 33 de la culasse forme le plénum 37 du dispositif d'admission 20. Le volume intérieur 37t du cône de diffusion forme donc la partie amont dudit plénum 37. Le cône de diffusion est en forme de parallélépipède car il est dans le prolongement de l'échangeur de chaleur 40.

Selon un mode de réalisation préféré de l'invention représenté par les figures 3 à 5, le dispositif d'admission 20 comporte un canal de distribution 14 comprenant une échancrure 15 creusée en bordure du répartiteur, jouxtant la culasse. Elle s'étend sur la largeur du plénum, transversalement à l'axe d'écoulement de l'air c'est-à-dire selon une direction sensiblement horizontale, de façon sensiblement parallèle à l'axe longitudinal du moteur passant par les centres des cylindres du moteur sur un plan horizontal, quand le répartiteur est monté fixé contre la paroi de fixation 32 de la culasse 30 dudit moteur. L'échancrure 15 présente une bouche d'ouverture 16 transversale à l'écoulement d'air donnant dans le plénum d'admission 37. L'échancrure 15 est ici disposée en partie basse du répartiteur 10.

De manière préférentielle, la longueur de l'échancrure est égale ou légèrement supérieure à la distance entre les débouchés dans le plénum de conduits d'admission 34 d'extrémité de la culasse, c'est-à-dire la distance comprise entre deux débouchés de conduits d'admission d'extrémité selon l'axe longitudinal du moteur. On pourra prendre la distance entre les axes desdits débouchés ou de manière préférentielle la distance entre les points d'extrémité des bords des débouchés des conduits d'admission d'extrémité selon l'axe longitudinal du moteur.

La largeur de l'échancrure est de l'ordre de quelques mm, par exemple comprise entre 3 et 15 mm.

Selon le mode de réalisation ledit enfoncement est destiné à venir en vis-à-vis du débouché 39 de la culasse quand le répartiteur est fixé en appui contre la culasse.

L'échancrure 15 comprend une rampe 17 qui peut être plane au bas de l'échancrure dont la pente peut être sensiblement continue pour permettre de diriger l'écoulement des gaz déshuilés et un ruissellement des condensats. La pente peut aussi présenter des paliers plans et sensiblement parallèles à la paroi inférieure du plénum selon un autre mode de réalisation.

La pente de la rampe est montante dans le sens d'écoulement des gaz déshuilés c'est-à-dire que la profondeur de l'échancrure 15 diminue progressivement dans le sens d'écoulement des gaz pour rapprocher le bas de l'extrémité aval de l'échancrure 15 du plenum 37.

Au niveau inférieur de la rampe 17 c'est-à-dire en partie amont de la rampe, une petite gorge de récupération 43 de condensats peut être creusée dans le trottoir de fixation 11, lesdits condensats peuvent être traités ensuite par un autre dispositif non décrit ici.

Le canal de distribution 14 comporte selon l'invention une échancrure présentant une bouche d'ouverture 16 dans le plénum 37. Afin de maitriser le flux des gaz déshuilés le long de l'échancrure, le canal de distribution comporte un ensemble de déflecteurs aptes à diriger au moins une partie des gaz selon l'axe de l'échancrure. Lesdits déflecteurs sont disposés en bordure de l'échancrure et présentent une inclinaison adaptée pour diriger les gaz vers l'axe de l'échancrure 15 selon le sens d'écoulement des gaz d'amont en aval indiqué par une flèche en figures 4 et 5.

Le canal de distribution 14 comporte un déflecteur amont 21 apte à diriger le flux des gaz le long de l'échancrure. L'objet dudit déflecteur amont 21 est de diriger le flux des gaz déshuilés vers l'échancrure 15 depuis l'enfoncement de réception 12. De manière préférentielle, ledit premier déflecteur 15 est une plaque inclinée sensiblement parallèle à l'axe de la rampe 17 de l'échancrure 15, et disposée à proximité de l'enfoncement 12.

Le canal de distribution 14 comprend au-moins un déflecteur 22 dit de maintien pour diriger une partie des gaz selon l'axe de l'échancrure. Lesdits au-moins un déflecteur de maintien 22 sont formés par des plaques inclinées sensiblement en biais vers le bas de l'échancrure pour former avec la rampe 17 une section de passage de gaz avec un convergent dans l'échancrure 15. De manière préférentielle, les au-moins un déflecteur de maintien 22 sont disposés en bordure de la bouche d'ouverture 16 de l'échancrure 15 donnant dans le plénum. Selon les figures 3 à 5, chacun desdits au-moins un déflecteur de maintien 22 est agencé légèrement en aval du débouché d'un conduit d'admission dans un cylindre. Si deux conduits d'admission 34 sont connectés au même cylindre comme représenté, le au-moins un déflecteur de maintien 22 associé est agencé légèrement en aval du débouché de conduit d'admission le plus en aval des deux conduits, le terme aval est relatif à l'écoulement des gaz déshuilés.

Le canal de distribution comprend un déflecteur aval 23 disposé sur la rampe 17 de l'échancrure 15, ledit déflecteur aval 23 présente une courbure tournée vers le plénum 37. Le déflecteur aval est disposé au niveau du débouché de conduit d'admission le plus en aval selon l'axe longitudinal du moteur et le sens d'écoulement des gaz déshuilés. Selon les figures 3 et 4, le déflecteur aval 23 est disposé à l'extrémité aval de la rampe 17. L'objet de ce déflecteur aval est de diriger le restant de flux de gaz déshuilés vers la bouche d'ouverture 16 donnant dans le plenum 37 et puis vers le débouché de conduit d'admission de la culasse.

Ledit répartiteur peut comprendre un enfoncement 12 de réception dans le trottoir de fixation 11, ledit enfoncement formant une chambre de réception pour recueillir les gaz. Ledit enfoncement 12 de réception est connecté au canal de distribution 14.

Le trottoir de fixation 11 comporte une rainure périphérique 19 qui entoure la section de passage du cône d'admission ainsi que le canal de distribution comprenant l'échancrure. La rainure périphérique est apte à recevoir un joint d'étanchéité 19'.

Le répartiteur est fixé contre la culasse, le trottoir de fixation 11 du répartiteur est alors en appui contre la paroi de fixation 32 de la culasse. L'échancrure 15 forme alors une une rainure ou une fente creusée entre le répartiteur 10 et la culasse 30 en partie inférieure du plénum 37. Ladite fente présente la bouche d'ouverture 16.

Les gaz déshuilés sont dirigés vers le canal de distribution 14. Ils sont dirigés par le déflecteur amont vers l'échancrure 15. Les au-moins un déflecteur de maintien permet ensuite de répartir efficacement le flux de gaz déshuilés vers les différents conduits d'admission du moteur. Les au-moins un déflecteur de maintien 22 permettent de garder une partie du flux de gaz s'écoulant dans l'échancrure. En effet, une première partie des gaz a tendance à pénétrer dans le plénum 37 et le au-moins un deuxième déflecteur permet de maintenir une deuxième partie du flux de gaz à continuer de s'écouler selon l'axe de l'échancrure.

Selon la figure 7, on voit que lesdits gaz déshuilés peuvent pénétrer dans le plénum mais ils sont rabattus vers les conduits d'admission par le flux d'air d'admission et également attirés par une dépression créée par l'ouverture des soupapes d'admission contrôlant l'admission d'air dans une chambre à combustion du moteur.

En extrémité aval de l'échancrure 15, le déflecteur aval 23 permet de diriger le restant de flux de gaz vers le plénum avec une perte de charge réduite.

L'échancrure forme une fente ou une crevasse dans la paroi du plénum 37 quand le répartiteur 10 est fixé contre la culasse 30. Des condensats et de l'huile peuvent se déposer dans le fond de l'échancrure et s'écouler suivant la rampe 17 lors du fonctionnement du moteur. En désolidarisant le répartiteur 10 de la culasse 30, on a alors accès directement aux conduits d'admission de gaz déshuilés. L'échancrure 15 permet donc un accès facile aux conduits d'admission de gaz déshuilés et donc de simplifier le nettoyage desdits conduits.

De manière préférentielle, le répartiteur 10 est obtenu de matière plastique ou en alliage métallique, ce qui rend plus aisé l'obtention du canal de distribution et en général des creusements ou rainures dans la paroi du trottoir de fixation 11 du répartiteur.

L'objectif est atteint :
Le dispositif d'admission 20 selon l'invention permet une admission de gaz issus de vapeurs d'huile facile à mettre en œuvre et peu couteuse. L'obtention de l'échancrure 15 peut être obtenue facilement par moulage ou usinage. Les déflecteurs 21, 22, 23 peuvent rapportés au répartiteur par collage ou soudage.

Comme il va de soi, l'invention ne se limite pas aux seules formes d'exécution de cette prise, décrites ci-dessus à titre d'exemples, elle en embrasse au contraire toutes les variantes.

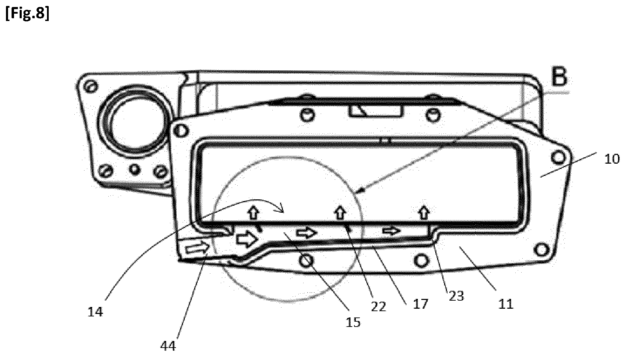

Par exemple, comme représenté en figure 8, le canal de distribution 14 peut comprendre un conduit d'entrée 44 des gaz déshuilés dont l'axe est parallèle au plan du trottoir de fixation 11, ledit conduit d'entrée débouche directement dans l'échancrure 15.

## Revendications

1. Dispositif d'admission (20) de moteur thermique de véhicule automobile comportant une culasse (30) et un répartiteur d'admission (10) fixé par un système de fixation comportant un trottoir de fixation (11) du répartiteur contre une paroi de fixation de la culasse, ledit répartiteur et ladite culasse étant conformés pour délimiter un plénum d'admission (37) recouvert par le répartiteur, dans lequel le dispositif comprend un canal de distribution (14) de gaz issus de vapeurs d'huile, **caractérisé en ce que** le canal de distribution comprend une échancrure (15) creusée en bordure du répartiteur entre le répartiteur (10) et la culasse (30) en partie inférieure du plénum (37) et donnant dans le plénum (37), s'étendant sur la largeur du plénum, transversalement à l'axe d'écoulement de l'air.

2. Dispositif d'admission (20) de moteur thermique selon la revendication 1, **caractérisé en ce que** l'échancrure (15) présente une section de passage transversale décroissante depuis la partie amont vers la partie aval selon le sens de circulation des gaz déshuilés.

3. Dispositif d'admission (20) de moteur thermique selon la revendication 1 ou 2, **caractérisé en ce que** l'échancrure (15) comprend une rampe (17) disposée au bas de l'échancrure.

4. Dispositif d'admission (20) de moteur thermique selon la revendication 3, **caractérisé en ce que** la rampe (17) présente une pente montante d'amont en aval pour rapprocher le bas de l'extrémité aval de l'échancrure (15) du plenum (37).

5. Dispositif d'admission (20) de moteur thermique selon l'une quelconque des revendications 1 à 4, **caractérisé en ce que** le canal de distribution (14) comprend des déflecteurs disposés en bordure de l'échancrure pour diriger les gaz le long de l'échancrure.

6. Dispositif d'admission (20) de moteur thermique selon l'une quelconque des revendications 1 à 5, **caractérisé en ce que** le canal de distribution (14) comporte un déflecteur amont (21) apte à diriger les gaz depuis une entrée desdits gaz selon l'axe de l'échancrure (15).

7. Dispositif d'admission (20) de moteur thermique selon l'une quelconque des revendications 1 à 6, **caractérisé en ce que** l'échancrure (15) comprend au moins un déflecteur (22) de maintien agencé en bordure du plénum (37).

8. Dispositif d'admission (20) de moteur thermique selon la revendication 7, **caractérisé en ce que** le au-moins un déflecteur de maintien (22) présente une forme de plaque inclinée qui converge vers le bas de l'échancrure selon le sens d'écoulement des gaz.

9. Dispositif d'admission (20) de moteur thermique selon l'une quelconque des revendications 1 à 8, **caractérisé en ce que** l'échancrure (15) comprend un déflecteur aval (23) à l'extrémité aval de l'échancrure, agencé en bas de l'échancrure.

10. Dispositif d'admission (20) de moteur thermique selon l'une quelconque des revendications 1 à 9, **caractérisé en ce que** le dispositif (20) comprend un débouché d'un conduit d'amenée de gaz débouchant de la paroi de fixation de la culasse (30).

11. Dispositif d'admission (20) de moteur thermique selon l'une quelconque des revendications 1 à 9, **caractérisé en ce que** le répartiteur (10) comprend un conduit d'entrée de gaz (44) dont l'axe est parallèle au trottoir de fixation (11).

12. Dispositif d'admission (20) de moteur thermique selon l'une quelconque des revendications 1 à 11, **caractérisé en ce que** le trottoir de fixation (11) du répartiteur (10) comprend un enfoncement de réception des gaz.

13. Moteur à combustion interne comprenant un dispositif d'admission selon l'une quelconque des revendications de 1 à 12.

14. Véhicule automobile comprenant un moteur thermique selon la revendication 13.

## Patentansprüche

1. Ansaugvorrichtung (20) für einen Kraftfahrzeugverbrennungsmotor, die einen Zylinderkopf (30) und einen Ansaugverteiler (10) aufweist, der durch ein Befestigungssystem befestigt ist, das einen Steg (11) zum Befestigen des Verteilers an einer Befestigungswand des Zylinderkopfs aufweist, wobei der Verteiler und der Zylinderkopf zum Begrenzen eines Ansaugplenums (37) konfiguriert sind, das durch den Verteiler abgedeckt wird, wobei die Vorrichtung einen Kanal (14) zum Abgeben von Gasen umfasst, die aus Öldämpfen stammen, **dadurch gekennzeichnet, dass** der Abgabekanal eine Kerbe (15) umfasst, die an dem Rand des Verteilers zwischen dem Verteiler (10) und dem Zylinderkopf (30) in einem unteren Teil des Plenums (37) ausgehöhlt ist und in das Plenum (37) mündet, wobei sie sich über die Breite des Plenums quer zu der Luftströmungsachse erstreckt.

2. Ansaugvorrichtung (20) für den Verbrennungsmotor nach Anspruch 1, **dadurch gekennzeichnet, dass** die Kerbe (15) einen Querkanalquerschnitt vorweist, der gemäß der Zirkulationsrichtung der entölten Gase von dem stromaufwärtigen Teil zu dem stromabwärtigen Teil abnimmt.

3. Ansaugvorrichtung (20) für den Verbrennungsmotor nach Anspruch 1 oder 2, **dadurch gekennzeichnet, dass** die Kerbe (15) eine Rampe (17) umfasst, die an dem Boden der Kerbe angeordnet ist.

4. Ansaugvorrichtung (20) für den Verbrennungsmotor nach Anspruch 3, **dadurch gekennzeichnet, dass** die Rampe (17) eine Steigung von stromaufwärts nach stromabwärts zum Heranrücken der Unterseite des stromabwärtigen Endes der Kerbe (15) an das Plenum (37) vorweist.

5. Ansaugvorrichtung (20) für den Verbrennungsmotor nach einem der Ansprüche 1 bis 4, **dadurch gekennzeichnet, dass** der Abgabekanal (14) Deflektoren, die an dem Rand der Kerbe angeordnet sind, zum Lenken der Gase entlang der Kerbe umfasst.

6. Ansaugvorrichtung (20) für den Verbrennungsmotor nach einem der Ansprüche 1 bis 5, **dadurch gekennzeichnet, dass** der Abgabekanal (14) einen stromaufwärtigen Deflektor (21) umfasst, der geeignet ist, die Gase von einem Einlass der Gase entlang der Achse der Kerbe (15) zu lenken.

7. Ansaugvorrichtung (20) für den Verbrennungsmotor nach einem der Ansprüche 1 bis 6, **dadurch gekennzeichnet, dass** die Kerbe (15) mindestens einen Haltedeflektor (22) umfasst, der an dem Rand des Plenums (37) eingerichtet ist.

8. Ansaugvorrichtung (20) für den Verbrennungsmotor nach Anspruch 7, **dadurch gekennzeichnet, dass** der mindestens eine Haltedeflektor (22) die Form einer geneigten Platte vorweist, die in die Gasströmungsrichtung zu dem Boden der Kerbe hin konvergiert.

9. Ansaugvorrichtung (20) für einen Verbrennungsmotor nach einem der Ansprüche 1 bis 8, **dadurch gekennzeichnet, dass** die Kerbe (15) einen stromabwärtigen Deflektor (23) an dem stromabwärtigen Ende der Kerbe umfasst, der an dem Boden der Kerbe angeordnet ist.

10. Ansaugvorrichtung (20) für den Verbrennungsmotor nach einem der Ansprüche 1 bis 9, **dadurch gekennzeichnet, dass** die Vorrichtung (20) einen Auslass einer Gaszufuhrleitung aufweist, der aus der Befestigungswand des Zylinderkopfs (30) austritt.

11. Ansaugvorrichtung (20) für den Verbrennungsmotor nach einem der Ansprüche 1 bis 9, **dadurch gekennzeichnet, dass** der Verteiler (10) einen Gaseinlasskanal (44) umfasst, dessen Achse parallel zu dem Befestigungssteg (11) verläuft.

12. Ansaugvorrichtung (20) für den Verbrennungsmotor nach einem der Ansprüche 1 bis 11,
**dadurch gekennzeichnet, dass** der Befestigungssteg (11) des Verteilers (10) eine Gasaufnahmevertiefung umfasst.

13. Verbrennungsmotor, umfassend eine Ansaugvorrichtung nach einem der Ansprüche 1 bis 12.

14. Kraftfahrzeug, umfassend einen Verbrennungsmotor nach Anspruch 13.

## Claims

1. Intake device (20) for a heat engine of a motor vehicle, the device comprising a cylinder head (30) and an intake distributor (10) attached by an attachment system comprising an attachment ledge (11) for attaching the distributor against an attachment wall of the cylinder head, the distributor and the cylinder head being shaped to define an intake plenum (37) covered by the distributor, the device comprising a distribution channel (14) for gas originating from oil vapors, **characterized in that** the distribution channel comprises a notch (15) hollowed out at the edge of the distributor between the distributor (10) and the cylinder head (30) in the lower part of the plenum (37) and opening into the plenum (37), extending over the width of the plenum, transversely to the air flow axis.

2. Intake device (20) for a heat engine according to claim 1,
**characterized in that** the notch (15) has a cross-sectional passage decreasing from the upstream portion to the downstream portion in the direction of flow of the deoiled gases.

3. Intake device (20) for a heat engine according to claim 1 or 2, **characterized in that** the notch (15) comprises a ramp (17) arranged at the bottom of the notch.

4. Intake device (20) for a heat engine according to claim 3,
**characterized in that** the ramp (17) slopes upward from upstream to downstream to bring the bottom of the downstream end of the notch (15) closer to the plenum (37).

5. Intake device (20) for a heat engine according to any of claims 1 to 4, **characterized in that** the distribution channel (14) comprises baffles arranged at the edge of the notch to direct the gases along the notch.

6. Intake device (20) for a heat engine according to any of claims 1 to 5, **characterized in that** the distribution channel (14) comprises an upstream baffle (21) capable of directing the gases from an inlet for said gases along the axis of the notch (15).

7. Intake device (20) for a heat engine according to any of claims 1 to 6, **characterized in that** the notch (15) comprises at least one retaining baffle (22) arranged at the edge of the plenum (37).

8. Intake device (20) for a heat engine according to claim 7, **characterized in that** the at least one retaining baffle (22) has the shape of an inclined plate which converges toward the bottom of the notch in the direction of flow of the gases.

9. Intake device (20) for a heat engine according to any of claims 1 to 8, **characterized in that** the notch (15) comprises a downstream baffle (23) at the downstream end of the notch, arranged at the bottom of the notch.

10. Intake device (20) for a heat engine according to any of claims 1 to 9, **characterized in that** the device (20) comprises an opening for a gas supply duct projecting out of the attachment wall of the cylinder head (30).

11. Intake device (20) for a heat engine according to any of claims 1 to 9, **characterized in that** the distributor (10) comprises a gas inlet duct (44) of which the axis is parallel to the attachment ledge (11).

12. Intake device (20) for a heat engine according to any of claims 1 to 11,
**characterized in that** the attachment ledge (11) of the distributor (10) comprises a gas-receiving recess.

13. Internal combustion engine comprising an intake device according to any of claims 1 to 12.

14. Motor vehicle comprising a heat engine according to claim 13.
